(19) Europäisches Patentamt
European Patent Office
Office européen des brevets

(11) Publication number: 0 584 422 A1

# (12) EUROPEAN PATENT APPLICATION

(21) Application number: 92402334.4

(22) Date of filing: 24.08.92

(51) Int. Cl.5: C08F 216/18, C08F 222/06, C08F 6/12

(43) Date of publication of application: 02.03.94 Bulletin 94/09

(84) Designated Contracting States: CH DE FR GB IT LI NL

(71) Applicant: DAICEL CHEMICAL INDUSTRIES, LTD.
No. 1-Banchi, Teppo-cho
Sakai-shi Osaka-fu 590(JP)

(72) Inventor: Kawaguchi, Naotaka
13-5, Kuba 4-chome
Otake-shi, Hiroshima-ken(JP)
Inventor: Shima, Koji
13-5, Kuba 4-chome
Otake-shi, Hiroshima-ken(JP)

(74) Representative: Portal, Gérard et al
Cabinet Beau de Loménie
158, rue de l'Université
F-75340 Paris Cédex 07 (FR)

## (54) An alkyl vinyl ether-maleic anhydride copolymer having high apparent bulk density and a process for the preparation thereof.

(57) An alkyl vinyl ether-maleic anhydride copolymer having a high apparent bulk density, and a process for the preparation thereof are disclosed.

The alkyl vinyl ether-maleic anhydride copolymer is capable of being easily handled in packing processes, and is capable of being easily dissolved.

FIGURE 1

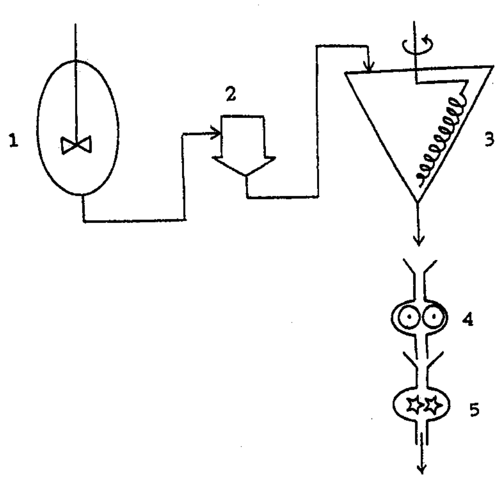


EP 0 584 422 A1

## FIELD OF THE INVENTION

The present invention relates to an alkyl vinyl ether-maleic anhydride copolymer having a high apparent bulk density, which is also capable of being easily dissolved, and a process for the preparation thereof.

In particular, the present invention relates to an alkyl vinyl ether-maleic anhydride copolymer which is capable of being easily handled in processes comprising packing and/or dissolving thereof.

## BACKGROUND OF THE INVENTION

An alkyl vinyl ether-maleic anhydride copolymer, in particular, a methyl vinyl ether-maleic anhydride copolymer, is a copolymer-anhydride having a linear molecular structure and is a water-soluble high molecular weight electrolyte copolymer compound which has been used as, for example, a surface active compound, a component of glass cleaners, a component of additives to builders for a detergent, and as sequestering agents themselves.

Recently, methyl vinyl ether-maleic anhydride copolymers have been used as a component of water-soluble additives to agents to be coated on a sticking plaster (e.g., under the name "Pappu-zai" in Japan) by mixing with endermic liniments and glues.

These copolymers have excellent non-toxic properties with respect to the human body, excellent chemical stability for long periods of time, excellent stickiness, aggregating ability, water absorbing ability, restrippability, etc.

Furthermore, copolymers in which maleic anhydride units are partially or completely ring-opened with water, alkalis, various alcohols, are also widely applied as thickening additives for water soluble materials, components of additives to adhesives, anti-sticking additives to detergents and components of additives to spray-type fixing agents for human hair.

Hitherto, it is well known that alkyl vinyl ether-maleic anhydride copolymers have been produced by a free radical copolymerization of an alkyl vinyl ether monomer with maleic anhydride monomer in the presence of a free radical catalyst and the absence of molecular oxygen at a temperature of from 40 to 120 °C in organic solvents in which the copolymer is insoluble, such as benzene in a closed autoclave reactor, etc., as described in U.S. Patent 2,782,182 and Japanese Examined Patent Publication (Kokoku) No. 29193/1970, etc.

The copolymerized product is removed from the autoclave reactor in the form of slurry, and the solvent is removed from the slurry to obtain a powdered copolymer.

On the other hand, as described in Japanese Unexamined Patent Publication (Kokai) No. 158214/1982, maleic anhydride can be dissolved in an excess amount of methyl vinyl ether without any other solvents, followed by vigorous stirring in a powdered bed to copolymerize, followed by a distillation removal of the excess amount of methyl vinyl ether monomer to obtain a copolymer containing small-sized granules and a small amount of large-sized granules, classified as a powder-state copolymer.

Furthermore, Japanese Unexamined Patent Publication (Kokai) No. 14222/1989 discloses that a polymerization can be carried out by using methyl vinyl ether as a solvent under pressurized conditions to produce a powder-state copolymer.

However, the powder-state copolymer such as in the above-described applications, particularly containing very small-sized powder, has the disadvantage of forming dust in the atmosphere when being supplied into a reactor or dissolver therefor.

The scattered powders make environment of the reactors, etc., dirty, and also workers breathing the scattered powders may suffer damage to their tracheas and/or lungs.

Still further, the powder-state copolymer containing the considerably small-sized powder has the disadvantage of floating on the liquid surface when preparing alcohol or water solutions, resulting in forming a state such as an undissolved lump of flour, and a long period of time is required to completely dissolve the copolymer.

Also, it is possible that the scattered powder may catch fire by a spark discharge brought about by static electricity or a spark by mechanical shock, etc., resulting in a dust explosion and severe accidents.

In order to decrease the content of the powder state copolymer, Japanese Unexamined Patent Publication (Kokai) No. 215509/1992 [entitled "A granulated maleic anhydride-methyl vinyl ether copolymer": corresponding to US Patent Application No. 679859/1991] discloses a preparation process comprising using a dryer having a specified structure which has an inverted conically shaped vessel, said vessel having a screw body adjacent to its sloped internal wall, said screw body revolving on its own shaft, and said screw body revolving by planetary motion along the sloped internal wall.

The Kokai discloses that by the use of the dryer, a methyl vinyl ether-maleic anhydride copolymer having maximum particle size granules larger than 600 microns and granules having a particle size distribution of more than 20 % can be prepared.

However, the copolymer has a disadvantage of low packing density because of an apparent bulk density of from approximately 0.25 to 0.27 g/cm$^3$. And, the time required to dissolve the copolymer is still longer, and the copolymer still has the tendency of forming a state such as undissolved lumps of flour.

In view of this background, and as a result of the extensive investigation, the present inventors have now completed the present invention.

## SUMMARY OF THE INVENTION

It is a primary object of the present invention to provide an alkyl vinyl ether-maleic anhydride copolymer having a high apparent bulk density.

It is an another object of the present invention to provide an alkyl vinyl ether-maleic anhydride copolymer having the capability of being easily completely dissolved in water without forming undissolved lumps of flour.

## BRIEF DESCRIPTION OF THE DRAWING

Figure 1 is a block diagram illustrating various equipments used for preparing an alkyl vinyl ether-maleic anhydride copolymer having high apparent bulk density.

## DETAILED DESCRIPTION OF THE DRAWING

1 is a reaction vessel, 2 is a centrifugal separator, 3 is a dryer, 4 is a roll press having two rolls and 5 is a crusher.

## DETAILED DESCRIPTION OF THE INVENTION

The present invention is now described hereinafter in more detail. The reaction for preparing a methyl vinyl ether-maleic anhydride copolymer which is a typical alkyl vinyl ether-maleic anhydride copolymer may be represented by the following equation:

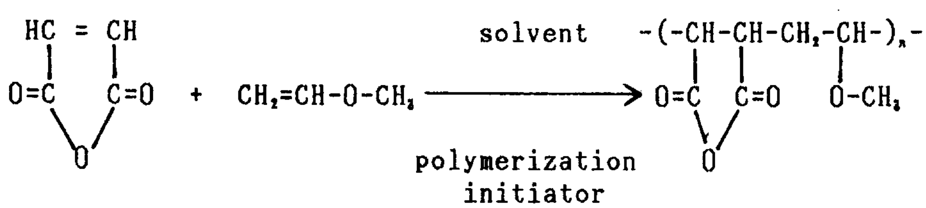


wherein "n" is from 10 to 100,000, "n" can be adjusted by controlling the charged amount of initiating agents for the polymerization reaction, the charging speed of methyl vinyl ether monomer, polymerization temperatures, and/or the charging speed of a chain transfer initiator.

The reaction is usually carried out by a sedimentation polymerization.

Preferred solvents useful in the sedimentation polymerization are those solvents in which the monomers are soluble, and the alkyl vinyl ether-maleic anhydride copolymer is insoluble, and furthermore those solvents which are inert.

Specific examples of solvents include an aromatic hydrocarbon solvent such as benzene, toluene or xylene, etc., a halogenated hydrocarbon solvent such as chloroform, methylene chloride, etc., or an azeotropic mixture thereof, etc.

Benzene has been a most preferable solvent, with which a high molecular weight copolymer can be readily obtained and the degree of polymerization can be readily controlled.

Recently, the use of a mixture composed of an aliphatic hydrocarbon and an acetic acid ester compound or dialkyl ketone in place of benzene which is a rather harmful solvent to human body has been disclosed.

The polymerization reaction is preferably carried out in the range of from about 5 to 30 % by weight of the concentration of the copolymer, and more preferably from about 10 to 30 % by weight.

Where the concentration is less than 5 % by weight, the solvent volume is too large to economically recover and refine the solvents.

Furthermore, a large volume of solvent would inevitably require a large scale plant, which is not reasonable from the viewpoint of plant economy.

On the other hand, where the concentration is more than 30 % by weight, the produced copolymer has a tendency of adhering to the internal wall of the reactor so that it is difficult to remove the copolymer from the reactor.

On carrying out the sedimentation copolymerization in the above described higher concentration of solvent, various anti-adhering agents can be preferably used, such as those disclosed in the US Patent 3,532,771. Various radical polymerization initiators such as organic peroxides can be used.

Specific initiators include lauryl peroxide, benzoyl peroxide, perbutyl oxide, azobis-isobutyl nitryl, t-butyl cyclohexyl peroxydicarbonate, etc.

The initiators can be added by a lump addition at the start of the polymerization reaction or by continuous or intermittent addition during the polymerization reaction.

The initiators is normally used in an amount of not more than 5 % by weight based on the total starting materials depending upon the types of the initiator or the desired molecular weight of the alkyl vinyl ether-maleic anhydride copolymer.

Where the amount used is more than 5 % by weight, the radical polymerization initiators may remain in the copolymer, resulting in lower purity of the copolymer.

Maleic anhydride, which is one of the starting monomers in the preparation of the copolymer, is preferably charged into the reactor and dissolved in the above-described solvents before initiating of the polymerization.

Successively, an alkyl vinyl ether, such as methyl vinyl ether which is another starting monomer, is preferably supplied continuously or intermittently during the polymerization.

The slurry concentration of the copolymer in the completion of the copolymerization depends upon the charged amounts of maleic anhydride and the solvent.

Accordingly, the amount of maleic anhydride to be charged is preferably maintained in the range of from about 3 % to 32 % based on the total amount of the starting materials.

Alkyl vinyl ether, such as methyl vinyl ether, is not necessarily supplied continuously or intermittently during the polymerization.

The fixed amount of alkyl vinyl ether can also be charged by lump addition with equivalent amount of maleic anhydride before initiating the copolymerization, as described in the Japanese Examined Patent Publication (Kokoku) No. 29193/1970.

In the case that the alkyl vinyl ether is supplied into the reactor continuously or intermittently during the polymerization reaction, the methyl vinyl ether is partially evaporated and lost from the liquid surface.

Accordingly, from one molar amount to double the molar amount based on the theoretical amount of alkyl vinyl ether should preferably be supplied; more preferably, from one molar amount to triple the molar amount is supplied.

Supplying the alkyl vinyl ether in more than triple the molar amount is not preferable, because of a great deal of loss.

Optimum temperatures for copolymerizing the alkyl vinyl ether-maleic anhydride copolymer are preferably from about 20 to 100 °C, and more preferably from about 40 to 80 °C, depending upon types of radical polymerization initiator and the solvents.

The produced copolymer, which is not dissolved in the non-polar solvents described hereinabove, is gradually separated as a solid with the progress of the polymerization reaction.

The produced copolymer is removed from the reactor in the form of slurry-state mixture composed of the copolymer and the solvent.

The slurry-state mixture is supplied to a centrifugal separator to partially remove the solvent and is then transferred to a drying process.

The obtained copolymer after centrifugal separation still contains from 30 % to 75 % by weight solvent, that is, the copolymer is wetted by the solvent. However, the wet copolymer does not have a tendency of fluidizing.

Drying of the wet copolymer is preferably carried out under heating and reduced pressure to completely remove the residual solvent in the wet copolymer.

For example, in the case of using benzene as a solvent, allowable content of the residual solvent in the dried copolymer is about 1 % by weight at the most in the cases described hereinabove.

On drying the wet copolymer, the granulated and dried copolymer can be obtained by controlling the drying conditions.

For example, a copolymer which is a precursor of the present copolymer having a high apparent specific density, can be obtained by drying the wet copolymer under reduced pressures with a dryer equipped with a vessel which has an inverted conically shaped-structure.

The vessel has a screw body along with its sloped internal wall wherein the screw body revolves on its own shaft and the screw body revolves by planetary motion along the sloped internal wall.

The meaning of phrase "the alkyl vinyl ether-maleic anhydride copolymer having a high apparent bulk density" in the present invention and the preparation process of the copolymer will be described hereinafter in detail.

The apparent bulk density of the copolymer in the present invention is defined as a numerical value measured based on the following methods and calculated by the equation.

That is, 50 g of a copolymer is accurately weighed and charged into a 250-mL graduated cylinder and tapped until there is no further loss in volume (using an auto tapper).

The equation for the calculation of the apparent bulk density is as follows:

$$\text{Apparent bulk density } (g/cm^3) = \frac{\text{weight in grams}}{\text{volume in mL}}$$

The phrase "the alkyl vinyl ether-maleic anhydride copolymer having a high apparent bulk density" in the present invention means that the copolymer contains the copolymer having an apparent bulk density of not less than 0.30 g/cm$^3$, more specifically from 0.30 to 0,60 g/cm$^3$.

As described hereinabove, an apparent bulk density of a conventional alkyl vinyl ether-maleic anhydride copolymer has been less than 0.3 g/cm$^3$, more specifically, 0.24-0.27 g/cm$^3$ or so immediately after drying.

It is known that a conventional alkyl vinyl ether-maleic anhydride copolymer also occasionally shows an apparent bulk density of slightly less than 0.30 g/cm$^3$, which is changed due to natural compression after long periods of during storing and/or shipment.

Successively, a process for increasing the apparent bulk density of the copolymer is described below in detail.

Conventionally, there have been known processes for increasing the apparent bulk density of powder-state materials such as a wet process in which the powder-state materials are mixed with a binder solution under high speed revolution, or a dry process in which the powder-state materials are statically tightened under reduced pressures.

The alkyl vinyl ether-maleic anhydride copolymer having apparent bulk density of not less than 0.30 g/cm$^3$ of the present invention can be prepared with a process comprising compressing the copolymer with rotating porous rolls in which pressure reduction is conducted.

The process is also a dry process which has an advantage of not requiring previous wetting and subsequent drying of the copolymer.

The rotating porous rolls can be arranged vertically or horizontally. On compressing the powder-state copolymer between two rolls, the internal pressures of the rolls are reduced.

Furthermore, the two rolls are thrust forward each other at high hydraulic pressures, and/or the narrow clearance between two rolls is mechanically maintained.

Although higher thrusting hydraulic pressures can prepare a copolymer having higher apparent bulk density, the pressures are practically from about 20 to 200 kg/cm$^2$, preferably from about 50 to 150 kg/cm$^2$.

On the other hand, the preferred clearance between two rolls is generally from about 3 mm to 20 mm, preferably, from about 5 mm to 10 mm depending upon the charged amounts of the powder-state copolymer and the speed of rotation, that is, productivity.

Although the size of the rolls, particularly, the length of the rolls, influences productivity of the product copolymer, a sufficient length is from about 50 to 1000 mm in consideration of required power of a motor or quality control of the product.

On the other hand, although the diameter of the rolls do not influence productivity of the copolymer so much, their preferred width is from about 50 to 500 mm in consideration of a balance with the length and machine costs.

The rotating speed of the rolls is generally from about 5 to 50 r.p.m. or so, preferably from about 20 to 30 r.p.m.

Although the higher rotating speed of the rolls can produce larger amounts of the product to a certain extent, apparent bulk density and particle sizes of the product can not be sufficiently controlled, and the motor can not be stably operated.

Successively, the compressed copolymer is preferably crushed with a crusher after compression, and then the crushed copolymer is preferably filtered with a screen in order to make apparent particle size uniform within a certain range of the particle sizes.

The crusher generally has two rolls on which teeth are formed, and also has a screen filter having reasonable mesh size.

By the above-described processes, the alkyl vinyl ether-maleic anhydride copolymer having high apparent bulk density of from 0.30 to 0.60 g/$cm^3$ can be prepared from the powder-state copolymer having apparent bulk density of from 0.24 to 0.27 g/$cm^3$.

Furthermore, the particle size of large amounts of copolymer particles can be increased from less than 0.5 mm to larger than 0.5 mm.

Although a relationship between apparent bulk density and the period of time required to be dissolved is not measured in detail, it appears that the copolymer having apparent bulk density of 0.35 g/$cm^3$ or so can be easily dissolved.

In addition, it appears that the copolymer having too high apparent bulk density may have a tendency such that its center portion is delayed in dissolving.

It is noted that particle size of the copolymer in the present invention was measured with a standard sieve shaker attached by net sieve designated by JIS Z8801.

The weight percents of the copolymer remaining over each sieve were measured to represent the particle size distribution range.

And also, the particle size distribution range of the copolymer was measured with a Lotap type sieve shaker.

Furthermore, it is noted that the period of time required to dissolve into water was measured based on the following steps;

(a) 360 g of water was charged into a 500 ml beaker, followed by being maintained at 70 °C, successively,

(b) 40 g of a copolymer was supplied into the beaker while stirring at 500 r.p.m.

(c) period of time during which the solution becomes flock-state and becomes not fluidized was measured, which is referred to as the period of time required to dissolve into water

The present invention is illustrated below by examples and comparative examples.

Example 1

[Preparation of a methyl vinyl ether/maleic anhydride copolymer before compression]

A reactor having a capacity of 200 liter equipped with a cooler for regulating and an internal temperature control unit was charged with 12.56 kg of maleic anhydride and 180 kg of benzene to dissolve the maleic anhydride.

Successively, the internal temperature of the reactor was maintained at a temperature of 80 C, followed by being charged with 22.5 liters of methyl vinyl ether from the bottom part of the reactor and 10 liters of benzene containing 18 g of lauryl peroxide for 4.5 hours to copolymerize.

After completion of the copolymerization reaction, the internal materials in the reactor were cooled to obtain a slurry-state copolymer having a solid content of 10 % by weight.

The slurry-state copolymer was supplied to a centrifugal separator to partially remove benzene and to obtain the copolymer wetted by benzene having a solid content of approximately 30 %.

Successively, 20 kg of the copolymer wetted by benzene was supplied to a dryer. After completion of drying, there was obtained a colorless powder-state copolymer having an apparent bulk density of 0.238-0.263 g/$cm^3$.

The particle size distribution of a first copolymer group is shown in Table 1.

Table 1

| Net sieve size (microns) | Weight ratio based on the total weight (%) |
|---|---|
| 2.00-1.41 | 0 |
| 1.41-1.00 | 0 |
| 1.00-0.71 | 0 |
| 0.71-0.50 | 11.5 |
| < 0.50 | 88.5 |

The time required to dissolve into water was 46 minutes.

The apparent bulk density was 0.238 g/$cm^3$.

Example 2

[Preparation of a methyl vinyl ether/maleic anhydride copolymer having an apparent bulk density of not less than 0.30 g/$cm^3$]

A second copolymer group having an apparent bulk density of 0.262 c/$cm^3$ was compressed with a roll press having two vertically-arranged rolls at two different roll pressures as set forth herebelow and in relation with Tables 2 and 3.

The operating conditions are set forth below.

| | |
|---|---|
| Roll Diameter<br>Roll Length<br>Roll Revolution speed | 228 mm<br>76 mm<br>15 r.p.m. |
| Roll pressure | 140 kg/$cm^2$<br>50 kg/$cm^2$ |
| Feed speed | 55 kg/hour |

The compressed copolymer was crushed and filtered with a crusher having a screen to which a screen mesh having 2 mm was attached.

Particle size distribution of the compressed copolymer parts passed through the screen was measured.

The particle size distributions of the compressed copolymer are shown in Tables 2 and 3 described below.

Table 2

| (Roll pressure: 140 kg/$cm^2$) | |
|---|---|
| Net sieve size (microns) | Weight ratio based on the total weight % |
| 2.00-1.41 | 14 |
| 1.41-1.00 | 56.4 |
| 1.00-0.71 | 14.8 |
| 0.71-0.50 | 6.0 |
| <0.50 | 8.8 |

The apparent bulk density in a group having not less than 0.50 micron of particle sizes was 0.490 g/$cm^3$, and the period of time required to dissolve in water was 39 minutes.

The apparent bulk density in a group having <0.50 micron of particle sizes was 0.345 g/$cm^3$, and the period of time required to dissolve in water was 35 minutes.

Table 3

| (Roll pressure: 50 kg/$cm^2$) | |
|---|---|
| Net sieve size (microns) | Weight ratio based on the total weight % |
| 2.00-1.41 | 14.8 |
| 1.41-1.00 | 59.2 |
| 1.00-0.71 | 16.0 |
| 0.71-0.50 | 5.6 |
| <0.50 | 4.4 |

The apparent bulk density in a group having not less than 0.50 micron of particle sizes was 0.453 g/$cm^3$, and the period of time required to dissolve in water was 39 minutes.

The apparent bulk density in a group having <0.50 micron of particle sizes was 0.313 g/$cm^3$, and the period of time required to dissolve in water was 38 minutes.

Example 3

A third copolymer group having an apparent bulk density of 0.263 g/$cm^3$ was compressed with a roll press having two horizontally-arranged rolls. The operating conditions are set forth below.

| | |
|---|---|
| Roll Diameter | 162 mm |
| Roll Length | 60 mm |
| Roll Revolution speed | 15 r.p.m. |
| Roll pressure | 103 kg/$cm^2$ |
| Feed speed | 46.1 kg/hour |

The compressed copolymer was crushed and filtered with a crusher having a screen to which a screen mesh having 2 mm was attached.

Particle size distribution of the compressed copolymer parts passed through the screen was measured.

The particle size distributions of the compressed copolymer are shown in Table 4 described below.

Table 4

| Net sieve size (microns) | Weight ratio based on the total weight (%) |
|---|---|
| 2.00-1.41 | 16.7 |
| 1.41-1.00 | 31.3 |
| 1.00-0.71 | 25.0 |
| 0.71-0.50 | 13.5 |
| <0.50 | 13.0 |

The apparent bulk density in a group having not less than 0.50 micron of particle sizes was 0.505 g/$cm^3$, and the period of time required to dissolve in water was 35 minutes.

The apparent bulk density in a group having <0.50 micron of particle sizes was 0.425 g/$cm^3$, and the period of time required to dissolve in water was 26 minutes.

Example 4

Same procedure as described in Example 3 was repeated, except that a fourth copolymer group having an apparent bulk density of 0.251 g/$cm^3$ was compressed.

The particle size distributions of the compressed copolymer are shown in Table 5 described below.

Table 5

| Net sieve size (microns) | Weight ratio based on the total weight (%) |
|---|---|
| 2.00-1.41 | 8.2 |
| 1.41-1.00 | 28.9 |
| 1.00-0.71 | 25.5 |
| 0.71-0.50 | 15.9 |
| <0.50 | 21.5 |

The apparent bulk density in a group having not less than 0.50 micron of particle sizes was 0.422 g/cm$^3$, and the period of time required to dissolve in water was 33 minutes.

The apparent bulk density in a group having <0.50 micron of particle sizes was 0.398 g/cm$^3$, and the period of time required to dissolve in water was 27 minutes.

While the invention has been described in detail and with reference to specific embodiments thereof, it will be apparent to one skilled in the art that various changes and modifications can be made therein without departing from the spirit and scope thereof.

## Claims

**1.** An alkyl vinyl ether-maleic anhydride copolymer having an apparent bulk density of not less than 0.30 g/cm$^3$.

**2.** An alkyl vinyl ether-maleic anhydride copolymer as set forth in claim 1, wherein said apparent bulk density is not less than 0.50 g/cm$^3$.

**3.** An alkyl vinyl ether-maleic anhydride copolymer as set forth in claim 1 or 2, wherein said alkyl vinyl ether is methyl vinyl ether.

**4.** An alkyl vinyl ether-maleic anhydride copolymer as set forth in claim 1, 2 or 3, wherein alkyl vinyl ether-maleic anhydride copolymer contains more than 90 weight % of particles having particle size of not less than 0.5 mm based on the total weight.

**5.** A process for the preparation of an alkyl vinyl ether-maleic anhydride copolymer having apparent bulk density of not less than 0.30 g/cm$^3$ which comprises compressing dry powder state alkyl vinyl ether-maleic anhydride copolymer with rotating porous rolls in which pressure reduction is conducted.

**6.** A process as set forth in claim 5, wherein said apparent bulk density of the dry powder state copolymer before compressing is from 0.24 to 0.27 g/cm$^3$.

**7.** A process as set forth in claim 5 or 6, further comprising crushing the compressed powder state copolymer in a crusher.

**8.** An alkyl vinyl ether-maleic anhydride copolymer having an apparent bulk density of not less than 0.30 g/cm$^3$ obtained by the process as set forth in any one of claims 5 to 7.

FIGURE 1

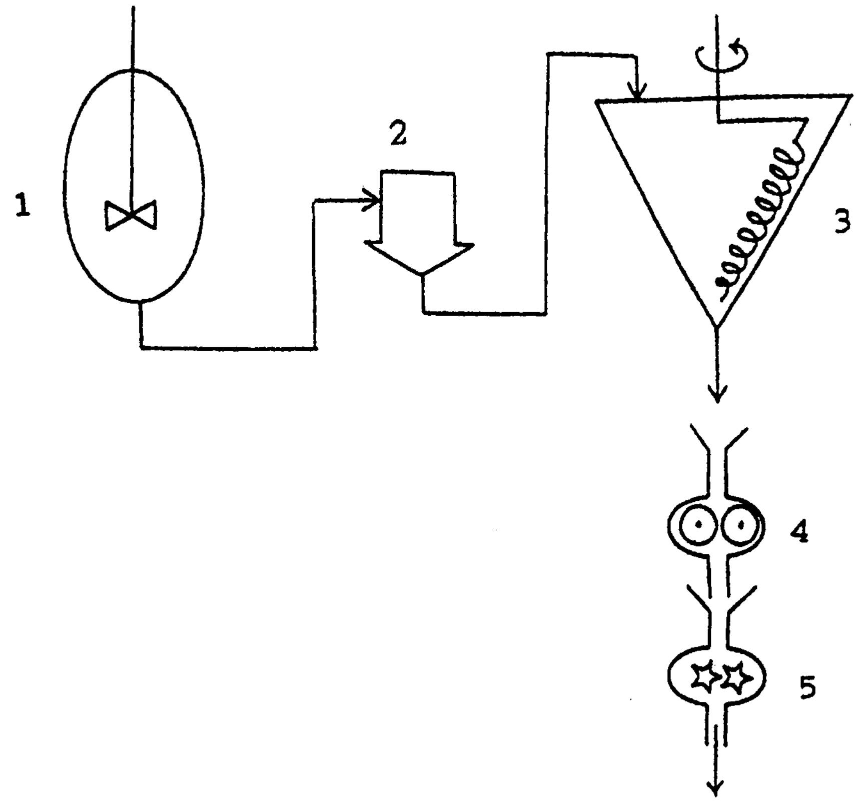

European Patent Office

# EUROPEAN SEARCH REPORT

Application Number

EP 92 40 2334

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 476 222 (DAICEL CHEMICAL IND. LTD.) * claim 1 * ----- | 1 | C08F216/18<br>C08F222/06<br>C08F6/12 |

| TECHNICAL FIELDS SEARCHED (Int. Cl.5 ) |
|---|
| C08F |

The present search report has been drawn up for all claims

| Place of search | Date of completion of the search | Examiner |
|---|---|---|
| THE HAGUE | 02 APRIL 1993 | CAUWENBERG C.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)